(19) Europäisches Patentamt
European Patent Office
Office européen des brevets

(11) Veröffentlichungsnummer: **0 466 002 B1**

(12) **EUROPÄISCHE PATENTSCHRIFT**

(45) Veröffentlichungstag der Patentschrift: **18.10.95**

(51) Int. Cl.[6]: **C08K 5/521**, C08K 5/524

(21) Anmeldenummer: **91110977.5**

(22) Anmeldetag: **03.07.91**

# (54) Stabilisierte Polyaryletherketon-Formmassen.

(30) Priorität: **12.07.90 DE 4022213**
**12.07.90 DE 4022214**

(43) Veröffentlichungstag der Anmeldung:
**15.01.92 Patentblatt 92/03**

(45) Bekanntmachung des Hinweises auf die Patenterteilung:
**18.10.95 Patentblatt 95/42**

(84) Benannte Vertragsstaaten:
**BE DE ES FR GB IT NL**

(56) Entgegenhaltungen:
**EP-A- 0 135 093**
**EP-A- 0 308 803**
**DE-A- 3 419 376**
**GB-A- 1 446 962**

(73) Patentinhaber: **BASF Aktiengesellschaft**
**Carl-Bosch-Strasse 38**
**D-67063 Ludwigshafen (DE)**

(72) Erfinder: **Koch, Jürgen, Dr.**
**Mainstrasse 5**
**W-6708 Neuhofen (DE)**
Erfinder: **Schuermann, Gregor, Dr.**
**Werderstrasse 40**
**W-6900 Heidelberg (DE)**
Erfinder: **Heinz, Gerhard, Dr.**
**Im Vogelsang 2**
**W-6719 Weisenheim (DE)**

EP 0 466 002 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Polyaryletherketon-Formmassen sind hochwertige Thermoplaste, die sich durch besonders hohe Temperaturbeständigkeit, hohe Zähigkeit, sehr gute mechanische Eigenschaften und Resistenz gegenüber den üblichen Lösungsmitteln auszeichnen.

Polyaryletherketone können nach zwei unterschiedlichen, an sich bekannten, verfahren hergestellt werden. Beim sogenannten nucleophilen Polykondensationsverfahren wird die Sauerstoffbrücke gebildet, indem z.B. aromatische Dihydroxyverbindungen mit Difluorketonen unter Basenkatalyse umgesetzt werden. Ein solches verfahren ist beispielsweise in der EP-A-1879 beschrieben.

Eine zweite Möglichkeit zur Herstellung von Polyaryletherketonen ist die elektrophile (Friedel-Crafts-)Polykondensation. Hierbei werden zur Bildung der Carbonylbrücke entweder aromatische Dicarbonsäuredichloride oder Phosgen mit Aromaten, welche zwei - durch elektrophile Substitution austauschbare - Wasserstoffatome enthalten, umgesetzt, oder es wird ein aromatisches Carbonsäurechlorid, das sowohl eine Säurechloridgruppe als auch ein substituierbares Wasserstoffatom enthält, mit sich selbst polykondensiert.

Friedel-Crafts-Reaktionen werden üblicherweise in Gegenwart einer Lewis-Säure als Katalysator in Lösungen durchgeführt, wie es z.B. in der US-A-3 441 538, US-A-3 442 857, US-A-3 953 400, DE-A-3 241 444, DE-A-34 16 445 und der DE-A-34 16 446 beschrieben ist. Die Reaktion in Gegenwart einer Lewis-Base ist ebenfalls möglich und beispielsweise in der EP-A-124 276 beschrieben.

Die durch elektrophile Polykondensation hergestellten Polyetherketone können durch Extraktion mit einem geeigneten Lösungsmittel weitgehend von den vorhandenen Säuren gereinigt werden, Spuren von Säure bleiben jedoch im Polymeren zurück.

Bei der thermoplastischen Verarbeitung von Polyaryletherketon-Formmassen werden in der Schmelze Temperaturen von 400 °C, kurzzeitig sogar Temperaturen um 450 °C erreicht. Bei diesen sehr hohen Temperaturen kommt es zu einem Anstieg der Schmelzeviskosität und zu einer zunehmenden Verfärbung der Formmassen. Dieses Verhalten kann die Verarbeitung wesentlich erschweren und die Gebrauchseigenschaften der Formteile beeinträchtigen.

Zur Reduzierung des viskositätsanstiegs und der Verfärbung wird in der GB-A-1 446 962 die Verwendung von einkernigen Phosphorverbindungen beschrieben. In der DE-A-34 19 376 wird vorgeschlagen, dem Polymeren Verbindungen des dreiwertigen Phosphors zuzusetzen. Die Verwendung von Phosphorverbindungen zur Verbesserung der Stabilität bei hohen Temperaturen wird auch in der EP-A-308 803 beschrieben. Diese Verbindungen weisen jedoch alle den Nachteil auf, daß sie bei der für Polyaryletherketonen üblichen Verarbeitungstemperatur aufgrund ihres Dampfdruckes aus der Schmelze ausgasen, was zu Geruchsbelästigungen und beim Spritzgießen zu Belägen auf der Formoberfläche führen kann.

Der Erfindung lag daher die Aufgabe zugrunde, Polyaryletherketon-Formmassen zur Verfügung zu stellen, die die vorstehend geschilderten Nachteile nicht aufweisen.

Unmittelbarer Erfindungsgegenstand ist eine stabilisierte Polyaryletherketon-Formmasse, enthaltend als wesentliche Bestandteile, bezogen auf das Gesamtgewicht der Formmasse

A: 50 bis 99,99 Gew.-% eines durch elektrophile Polykondensation hergestellten Polyaryletherketons A, das zu mindestens 50 mol-% aus Einheiten der allgemeinen Formel I

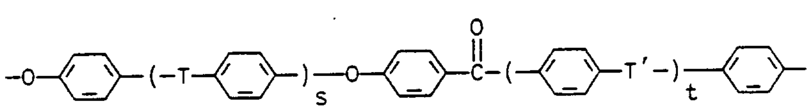 I

oder deren kernsubstituierten $C_1$- bis $C_8$-Alkyl-, $C_6$- bis $C_{20}$-Aryl- oder Halogenderivaten besteht, wobei s, t jeweils den Wert 0, 1, 2 oder 3 annehmen können und T, T' -O- oder -CO- bedeuten,

B: 0,01 bis 4 Gew.-% einer polymeren Phosphorverbindung B, enthaltend Einheiten der allgemeinen Formel IIa

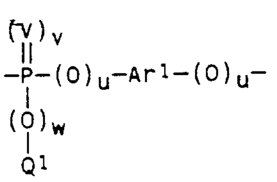 (IIa),

oder der allgemeinen Formel IIb

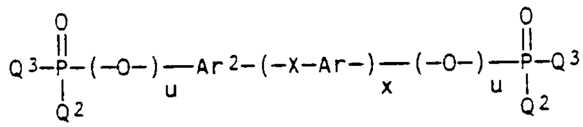 (IIb),

in denen die Substituenten und Indices folgende Bedeutungen haben:

- V — Sauerstoff oder Schwefel
- $Q^1$ — $C_1$- bis $C_{25}$-Alkylgruppen oder Arylgruppen mit 6 bis 25 C-Atomen, wobei die aromatischen Ringe durch Alkylgruppen mit 1 bis 4 C-Atomen ein- bis dreifach substituiert sein können
- $Q^2$, $Q^3$ — unabhängig voneinander $C_1$- bis $C_{20}$-Alkylgruppen, $C_1$- bis $C_{20}$-Alkoxygruppen, Aryl- oder Aryloxygruppen mit 6 bis 20 Kohlenstoffatomen, wobei die vorgenannten Kohlenwasserstoffreste durch 1 bis 3 Heteroatome wie Stickstoff, Sauerstoff oder Schwefel unterbrochen sein können
- $Ar^1$ — meta-Phenylen, para-Phenylen oder 2 bis 6 aromatische Ringe, die in meta- oder para-Stellung durch eine chemische Bindung, durch Sauerstoff, Schwefel, eine (-CO-)-Gruppe, eine $(-SO_2-)$-Gruppe oder eine $(-C(CH_3)_2-)$-Gruppe miteinander verknüpft sind und wobei jeder aromatische Ring ein- bis dreifach durch Alkylgruppen mit 1 bis 4 C-Atomen substituiert sein kann
- $Ar^2$ — meta- oder para-Phenylen, das ein- bis dreifach durch $C_1$-bis $C_{10}$-Alkyl-, $C_1$- bis $C_{10}$-Alkoxy, $C_6$- bis $C_{20}$-Aryl, $C_6$- bis $C_{20}$-Aryloxygruppen oder Halogenatome substituiert sein kann
- X — -O-, -CO-, -S-, eine $(-SO_2-)$-Gruppe, eine $(-C(CH_3)_2-)$-Gruppe oder eine chemische Bindung
- u,v,w — 0 oder 1 und
- x — 0, 1 oder 2

C: bis 50 Gew.-% eines weiteren, von A) verschiedenen Thermoplasten,

D: bis 45 Gew.-% faser- oder teilchenförmige Füllstoffe oder deren Mischungen.

Die als Komponente A) eingesetzten Polyaryletherketone bestehen zu mindestens 50 mol-% aus Einheiten der allgemeinen Formel I

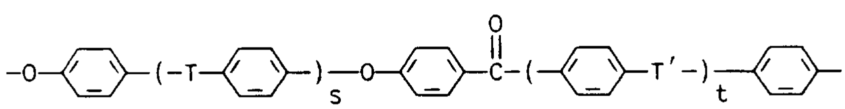 I

wobei s und t jeweils den Wert 0, 1, 2 oder 3 annehmen können und T und T' ein Sauerstoffatom oder eine Carbonylgruppe bedeuten. Grundsätzlich können die aromatischen Einheiten der Polyaryletherketone I mit $C_1$- bis $C_8$-Alkyl-, $C_6$- bis $C_{20}$-Arylresten oder Halogenatomen substituiert sein. Im allgemeinen werden jedoch die unsubstituierten Derivate bevorzugt. Beispiele für besonders bevorzugte Einheiten der allgemeinen Formel I sind:

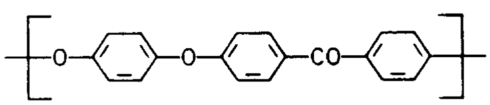 Ia

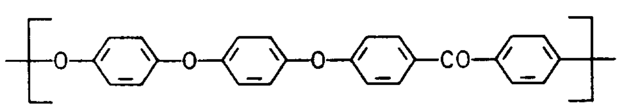 Ib

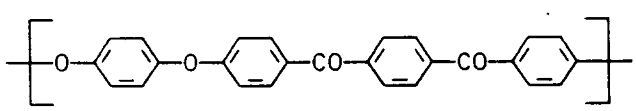 Ic

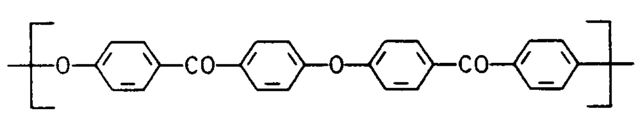 Id

und insbesondere

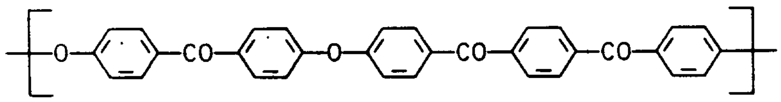

Ie

über die Substituenten T und T' sowie die Parameter s und t lassen sich die vorstehenden Beispiele wie folgt beschreiben:

| | s | t | T | T' |
|---|---|---|---|---|
| Ia | 0 | 0 | - | - |
| Ib | 1 | 0 | O | - |
| Ic | 0 | 1 | - | CO |
| Id | 1 | 0 | CO | - |
| Ie | 1 | 1 | CO | CO |

Die Komponente A wird in Mengen von 50 bis 99,99 Gew.-%, bezogen auf das Gesamtgewicht der Formmassen, eingesetzt, bevorzugt 60 bis 99,99 Gew.-%, insbesondere 70 bis 99,99 Gew.-%.

Die Herstellung der Polyaryletherketone erfolgt durch elektrophile Polykondensation; es wird bei den üblichen, dem Fachmann bekannten, Verfahrensbedingungen gearbeitet. Verwendet man als Ausgangsstoffe aromatische Dicarbonsäuredichloride und Aromaten, die zwei substituierbare Wasserstoffatome aufweisen, so sind beispielsweise Terephthalsäuredichlorid oder 4,4'-Diphenyldicarbonsäuredichlorid sowie Diphenylether, 1,4-Diphenoxybenzol oder 4,4'-Diphenoxybenzophenon zu nennen. Als selbstkondensierbares Monomer ist 4-Phenoxybenzoylchlorid geeignet.

Die als Komponente B eingesetzten polymeren Phosphorverbindungen enthalten entweder Einheiten der allgemeinen Formel IIa

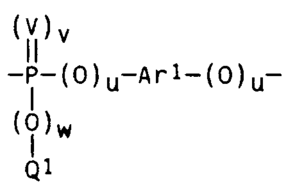

IIa,

oder der allgemeinen Formel IIb (vgl. unten). Darin steht V für Sauerstoff oder Schwefel, $Q^1$ für $C_1$- bis $C_{25}$-Alkylgruppen, bevorzugt $C_1$- bis $C_{20}$-Alkylgruppen, oder für Arylgruppen mit 6 bis 25 C-Atomen, bevorzugt für Phenyl, wobei die aromatischen Ringe durch Alkylgruppen mit 1 bis 4 C-Atomen, vorzugsweise mit tert.-Butylgruppen, ein- bis dreifach, bevorzugt ein- bis zweifach substituiert sein können. Der Substituent $Ar^1$ bedeutet einen zweiwertigen, gegebenenfalls substituierten aromatischen Rest, der einen bis sechs aromatische Ringe enthält, wobei die einzelnen Ringe in meta- oder para-Stellung durch eine chemische Bindung, durch Sauerstoff, Schwefel, eine (-CO-)-Gruppe, eine ($-SO_2-$)-Gruppe oder eine ($-C(CH_3)_2-$)-Gruppe miteinander verknüpft sind. Bevorzugt sind Einheiten der allgemeinen Formel IIa, in der $Ar^1$ für unsubstituiertes oder zweifach durch Methylgruppen substituiertes para-Phenylen steht, für zwei bis vier unsubstituierte aromatische Ringe, die vorzugsweise in para-Stellung verknüpft sind, wobei sich bei zwei Ringen die Verknüpfung über eine chemische Bindung, über eine (-CO-)-Gruppe, eine ($-SO_2-$)-Gruppe oder eine ($-C(CH_3)_2-$)-Gruppe als besonders geeignet erwiesen hat; bei Verbindungen mit drei Ringen ist die zweimalige Verknüpfung über je eine ($-C(CH_3)_2-$)-Gruppe besonders bevorzugt und bei den Verbindungen mit 4 aromatischen Ringen sind diejenigen bevorzugt, die einen symmetrischen Aufbau der Form aufweisen, daß an die bevorzugt aufgeführten Verbindungen mit zwei aromatischen Ringen in para-Stellung jeweils noch eine ($-O-C_6H_4-$)-Gruppe gebunden ist. Die Indices u, v und w der Formel IIa können die Werte 0 oder 1 annehmen.

Beispiele für besonders bevorzugte Einheiten der allgemeinen Formel IIa sind:

| | u | v | w | V |
|---|---|---|---|---|
| Phosphine | 0 | 0 | 0 | - |
| Phosphinoxide | 0 | 1 | 0 | O |
| Phosphonigsäureester | 1 | 0 | 0 | - |
| Phosphonsäureester | 1 | 1 | 0 | O |
| Phosphorigsäureester | 1 | 0 | 1 | - |
| Phosphorsäureester | 1 | 1 | 0 | O |
| Thioposphorsäureester | 1 | 1 | 1 | S |

Insbesondere sind folgende Einheiten zu nennen:

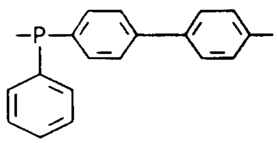

IIa, 1

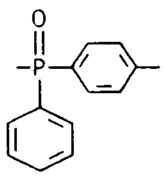

IIa, 2

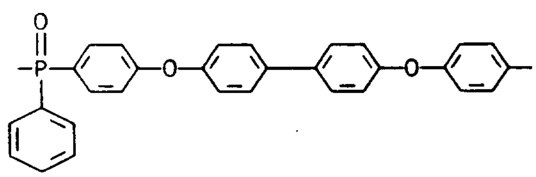

IIa, 3

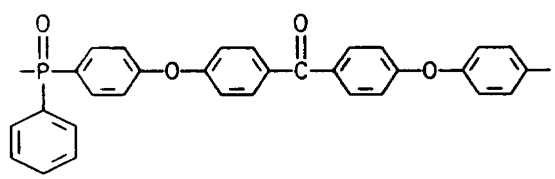

IIa, 4

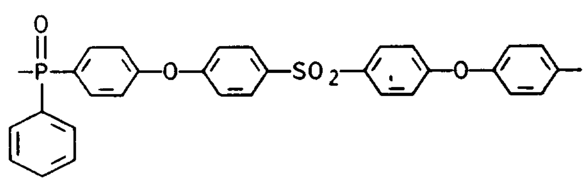

IIa, 5

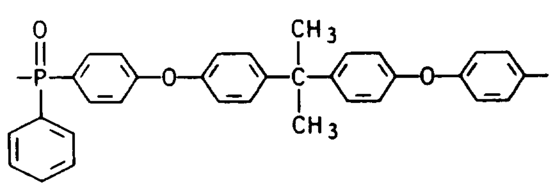

IIa, 6

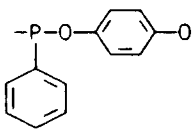

IIa, 7

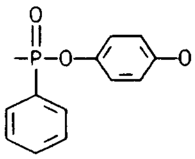

IIa, 8

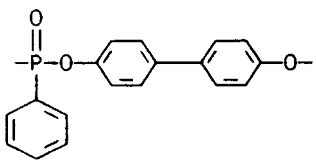

IIa, 9

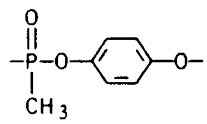

IIa, 10

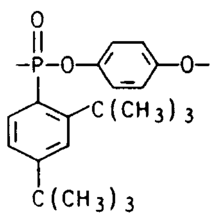

IIa, 11

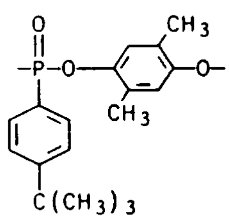

IIa, 12

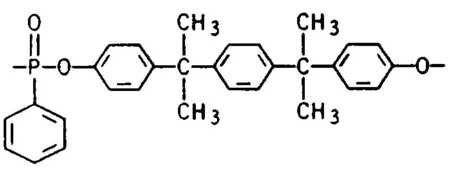

IIa, 13

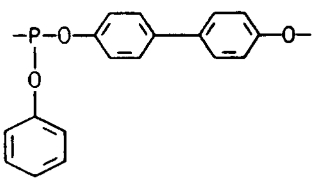

IIa, 14

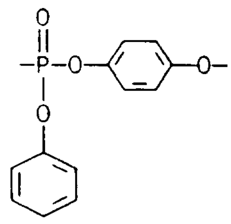

IIa, 15

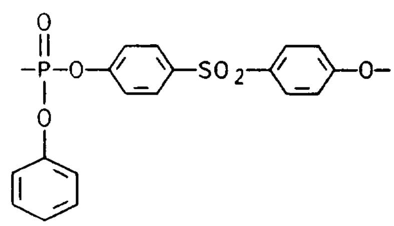

IIa, 16

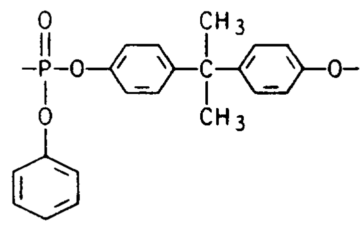

IIa, 17

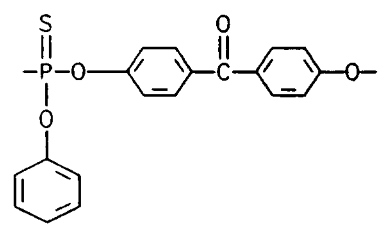

IIa, 18

Die Komponente IIa weist eine inhärente Viskosität größer als 0,1, bevorzugt 0,2 bis 0,8 (gemessen an einer Lösung von 1 g/100 ml in N-Methylpyrrolidon bei 25 °C) auf.

Als Komponente B werden außerdem zweikernige Phosphorverbindungen der allgemeinen Formel IIb

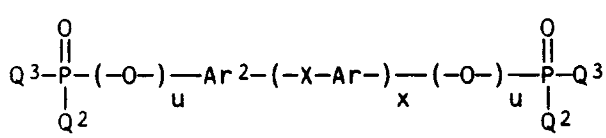

IIb

eingesetzt, in der $Q^2$ und $Q^3$ $C_1$- bis $C_{20}$-Alkyl, $C_1$- bis $C_{20}$-Alkoxy-, $C_6$- bis $C_{20}$-Aryl- oder $C_6$- bis $C_{20}$-Aryloxygruppen bedeuten, wobei die Kohlenwasserstoffreste durch 1 bis 3 Heteroatome wie Stickstoff, Sauerstoff oder Schwefel unterbrochen sein können. Bevorzugt sind die Verbindungen zu nennen, in denen $Q^2$ und $Q^3$ die gleiche Bedeutung aufweisen. Bedeuten $Q^2$ und $Q^3$ Alkyl- oder Alkoxygruppen, so sind die $C_3$- bis $C_{12}$-Verbindungen bevorzugt. Von den Arylgruppen ist vorzugsweise die Phenylgruppe zu nennen, von den Aryloxygruppen die Phenoxygruppe. Enthalten die Kohlenwasserstoffreste Heteroatome, so sind die Anisyl-, die Pyridinyl- und die Thienylgruppe geeignet.

Der Substituent $Ar^2$ steht für meta- oder para-Phenylen, das seinerseits ein- bis dreifach durch Alkyl- oder Alkoxygruppen mit 1 bis 10 C-Atomen, durch Aryl- oder Aryloxygruppen mit 6 bis 20 C-Atomen oder durch Halogenatome substituiert sein kann. Bevorzugt sind die unsubstituierten Reste, insbesondere para-Phenylen.

X bedeutet Sauerstoff, Schwefel, eine Carboxylgruppe, eine ($-SO_2-$)-Gruppe, eine ($-C(CH_3)_2-$)-Gruppe oder eine chemische Bindung, bevorzugt eine ($-SO_2-$)-Gruppe, eine Carbonylgruppe oder eine chemische

Bindung.

Bei den Indices kann u die Werte 0 oder 1 annehmen, wobei der Wert 1 bevorzugt ist, x steht für 0, 1 oder 2, bevorzugt für 0 oder 1.

Beispiele für besonders bevorzugte zweikernige Phosphorverbindungen der allgemeinen Formel IIb sind:

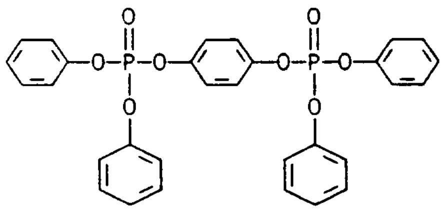

IIb, 1

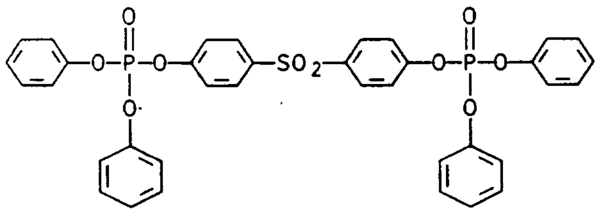

IIb, 2

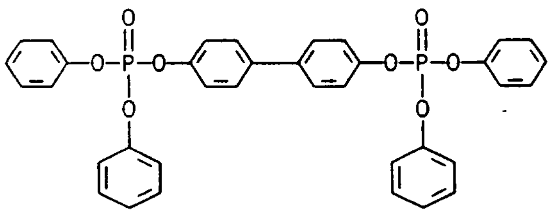

IIb, 3

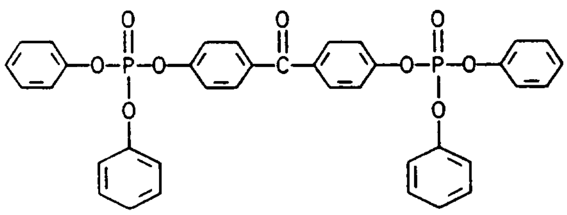

IIb, 4

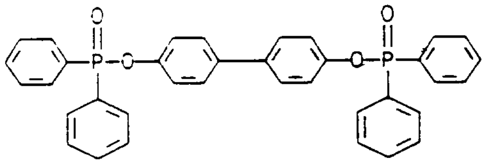

IIb, 5

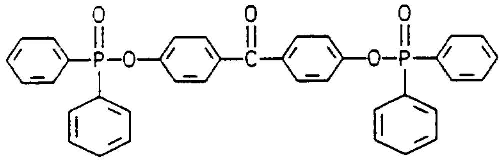

IIb, 6

über die Substituenten $Q^2$, $Q^3$, $Ar^1$ und X sowie die Parameter u und x lassen sich die vorstehenden Beispiele wie folgt beschreiben:

| | $Q^2$, $Q^3$ | Ar | X | u | x |
|---|---|---|---|---|---|
| IIb,1 | $-O-C_6H_5$ | $p-C_6H_4$ | - | 1 | 0 |
| IIb,2 | $-O-C_6H_5$ | $p-C_6H_4$ | $SO_2$ | 1 | 1 |
| IIb,3 | $-O-C_6H_5$ | $p-C_6H_4$ | chem. Bdg. | 1 | 1 |
| IIb,4 | $-O-C_6H_5$ | $p-C_6H_4$ | CO | 1 | 1 |
| IIb,5 | $-C_6H_5$ | $p-C_6H_4$ | chem. Bdg. | 1 | 1 |
| IIb,6 | $-C_6H_5$ | $p-C_6H_4$ | CO | 1 | 1 |

Die Komponente B wird in Mengen von 0,01 bis 4 Gew.-%, bevorzugt von 0,1 bis 1 Gew.-%, bezogen auf das Gesamtgewicht der Formmassen, eingesetzt.

Die Herstellung von geeigneten polymeren Phosphorverbindungen IIa ist beispielsweise in der US-A-3 993 623 und der DE-A-29 25 206 beschrieben, sowie in K.S. Annakutty, K. Kishore, Polymer, 29, 756-761 (1988), K. Kishore, K.S. Annakutty, I.M. Mallick, Polymer, 29, 762-764 (1988) und H. Kricheldorf, H. Koziel, New Polymeric Materials, 1, 143-153 (1988). Allgemeine Herstellungsverfahren sind aus Houben-Weyl, Methoden der organischen Chemie, Phosphorverbindungen, 1963 bekannt.

Die Herstellung der zweikernigen Phosphorverbindungen IIb kann durch Umsetzung eines Säurechlorids der entsprechenden Phosphorverbindung mit Dihydroxyphenylenverbindungen unter Entfernung des entstehenden Chlorwasserstoffs erfolgen, wie in Houben-Weyl, Methoden der organischen Chemie, Phosphorverbindungen, Teil 1, 1963 beschrieben.

Zusätzlich können weitere, von der Komponente A verschiedene, Thermoplasten C eingemischt werden. Hierbei eignen sich besonders Polyarylethersulfone oder deren Copolymere, Polyetherimide, Polyamidimide, Polyimide, aromatische Polyester, Polyphenylensulfide, Fluor-Polymere und aliphatische oder aromatische Polyamide.

Entsprechende Produkte sind dem Fachmann bekannt und kommerziell erhältlich.

Diese Polymeren können in Mengen von 0 bis 50 Gew.-%, bevorzugt von 5 bis 30 Gew.-% zugesetzt werden.

Weiterhin können die erfindungsgemäßen stabilisierten Polyaryletherketon-Formmassen als Komponente D faser- oder teilchenförmige Füllstoffe, sowie deren Mischungen, in Mengen von 0 bis 45 Gew.-%, insbesondere von 5 bis 40 Gew.-%, enthalten. Als verstärkend wirkende Füllstoffe seien beispielsweise Asbest oder Fasern aus Aramid, Glas oder Kohlenstoff genannt, die sowohl als Kurzfasern als auch als Endlosfasern eingesetzt werden können. Weiterhin können Pigmente wie Titandioxid, Cadmium- oder Zinksulfid, Bariumsulfat und Ruß zugemischt werden. Als weitere Zusatz- und Hilfsstoffe kommen beispielsweise Flammschutzmittel, weitere von B) verschiedene Stabilisatoren und übliche Verarbeitungshilfsmittel in Betracht.

Zur Herstellung der erfindungsgemäßen stabilisierten Polyaryletherketon-Formmassen können die Komponenten A und B sowie gegebenenfalls C und D in einer Mischvorrichtung, vorzugsweise in einem Extruder, bei einer Gehäusetemperatur von 350 bis 450 °C, vorzugsweise von 390 bis 420 °C, umgesetzt werden. In einer bevorzugten Ausführungsform wird zu einem Strang extrudiert und granuliert.

Die erfindungsgemäßen stabilisierten Polyaryletherketon-Formmassen sind heller und weisen eine wesentlich bessere Fließfähigkeit und Schmelzstabilität als nicht stabilisierte Formmassen auf; außerdem wurden keinerlei Ausgasungen aus der Schmelze beobachtet. Die stabilisierten Polyaryletherketon-Formmassen eignen sich daher insbesondere zur Herstellung von Fasern, Folien und Formkörpern.

Beispiele

Herstellung des Polyaryletherketons

Nach der in der EP-A-124 276, Beispiel 13 beschriebenen Methode wurde ein Polyaryletherketon der Struktur Ie

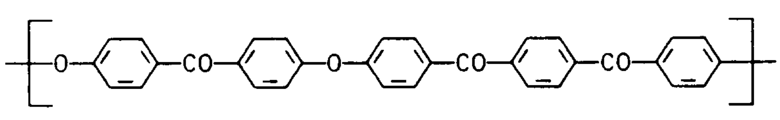

Ie

mit einer inhärenten Viskosität von 0,997 (gemessen an 0,5 g/100 ml in konzentrierter Schwefelsäure bei 25 ° C) hergestellt.

Herstellung der polymeren Phosporverbindungen IIa

Herstellung eines Phosphinoxids der Formel IIa, 6

51,941 g (0,15 mol) 4,4'-Bis(fluor)triphenylphosphinoxid, 34,244 g (0,15 mol) Bisphenol A und 22,805 g (0,165 mol) Kaliumcarbonat wurden mit 200 ml N-Methylpyrrolidon versetzt und 7 Stunden bei 200 ° C unter Rückfluß gerührt. Nach dem Abkühlen wurde das polymere Reaktionsprodukt durch Eintropfen in Wasser gefällt, durch Filtration abgetrennt und mehrmals mit kochendem Wasser extrahiert. Nach dem Trocknen wurde ein Polymer der Formel IIa, 6 mit einer inhärenten Viskosität von 0,14 (gemessen an 1 g/100 ml N-Methylpyrrolidon bei 25 ° C) erhalten.

Herstellung eines Phosphinoxids der Formel IIa, 3

Unter den in Beispiel 2 beschriebenen Bedingungen wurden 31,427 g (0,1 mol) 4,4'-Bis(fluor)-triphenylphosphinoxid, 18,621 g (0,1 mol) 4,4'-Dihydroxybiphenyl und 15,203 g (0,11 mol) Kaliumcarbonat mit 200 ml N-Methylpyrrolidon umgesetzt und aufgearbeitet. Es wurde ein Polymer der Formel IIa, 3 mit einer inhärenten Viskosität von 0,307 erhalten.

Herstellung eines Phosphonsäureesters der Formel IIa, 9

19,499 g (0,1 mol) Benzolphosphonsäuredichlorid und 18,621 g (0,1 mol) 4,4'-Dihydroxybiphenyl wurden in 200 ml getrocknetem 1,2-Dichlorethan vorgelegt und auf 10 ° C abgekühlt. Dazu wurden langsam 21,25 g (0,21 mol) Triethylamin getropft, wobei die Temperatur auf etwa 40 ° C anstieg. Das breiartige Reaktionsgemisch wurde 7 Stunden unter Rückfluß gerührt. Nach dem Abkühlen wurde das ausgefallene Triethylammoniumchlorid abfiltriert, die klare Polymerlösung in Methanol getropft und das Polymer gefällt. Der Niederschlag wurde abfiltriert und mehrmals mit kochendem Methanol extrahiert.

Nach dem Trocknen wurde ein Polymer der Formel IIa, 9 mit einer inhärenten Viskosität von 0,365 erhalten.

Beispiel 1 bis 3 Herstellung stabilisierter Polyaryletherketon-Formmassen

Das Polyaryletherketon wurde mit je 0,5 Gew.-% der polymeren Phosphorverbindung als Stabilisator versetzt, intensiv gemischt und auf einem Extruder bei einer Gehäusetemperatur von 400 ° C zu einem Strang extrudiert und granuliert.

Vergleichsversuche V1 bi V3

V1: Das Polyaryletherketon wurde ohne Zusatz eines Stabilisators extrudiert und granuliert.
V2: Es wurde 0,5 Gew.-% Triphenylphosphat als Stabilisator hinzugefügt.
V3: Es wurde 0,5 Gew.-% Trikresylphosphat als Stabilisator hinzugefügt.

Aus den jeweiligen Granulaten wurde die Schmelzestabilität bestimmt. Die Messung erfolgte durch Bestimmung des Schmelzindex (MVI) nach DIN 53 735-MFI-B mit einem Gerät des Typs MP-D der Firma Göttfert bei 400 ° C mit 10 kg Auflagegewicht. Mit jeder Probe wurden drei Messungen mit 5, 30 und 60 Minuten Aufheizzeit durchgeführt. Die Ergebnisse sind in der Tabelle zusammengestellt.

Tabelle

| Beispiel | Stabilisator | MVI [ccm/10 min] | | | Bemerkung |
|---|---|---|---|---|---|
| | | 5 min | 30 min | 60 min | |
| 1 | IIa, 6 | 70,3 | 66,2 | 59,6 | (1) |
| 2 | IIa, 3 | 87,3 | 82,8 | 74,3 | (1) |
| 3 | IIa, 9 | 60,4 | 52,0 | 46,2 | (1) |
| V1 | - | 51,8 | 42,8 | 32,1 | - |
| V2 | Triphenylphosphat | 73,8 | 65,9 | 45,3 | (2) |
| V3 | Trikresylphosphat | 75,3 | 68,9 | 33,7 | (3) |

(1): Kein wahrnehmbarer Geruch bei der Verarbeitung
(2): Geruchsentwicklung bei der Extrusion, Polymer schäumt leicht bei der MVI-Messung
(3): Sehr intensiver Geruch bei der Extrusion

Beispiele 4 bis 8

Herstellung einer stabilisierten Polyaryletherketon-Formmasse unter Verwendung einer Phosphorverbindung IIb

Das Polyaryletherketon wurde mit jeweils 0,5 Gew.-% Stabilisator versetzt, intensiv gemischt und auf einem Extruder bei einer Gehäusetemperatur von 400 °C zu einem Strang extrudiert und granuliert; im übrigen wurde wie vorstehend ausgewertet. Das Ergebnis ist in der Tabelle wiedergegeben.

Tabelle

| Bsp. | Stabilisator | MVI [ccm/10 min] 5 min | 30 min | 60 min | Farbe | Bemerkungen |
|---|---|---|---|---|---|---|
| 4 | IIb, 1 | 83,7 | 88,2 | 65,2 | hellgrau | (1) |
| 5 | IIb, 2 | 86,1 | 66,9 | 40,7 | mittelbraun | (1) |
| 6 | IIb, 3 | 78,8 | 70,6 | 40,1 | hellgrau | (1) |
| 7 | IIb, 5 | 84,3 | 73,0 | 50,9 | hellbraun | (1) |
| 8 | IIb, 6 | 80,6 | 77,0 | 68,6 | hellbraun | (1) |
| V1 | - | 51,8 | 42,8 | 32,1 | mittelbraun | - |
| V2 | Triphenylphosphat | 73,8 | 65,9 | 45,3 | mittelbraun | (2) |
| V3 | Trikresylphosphat | 75,3 | 68,9 | 33,7 | mittelbraun | (3) |

(1): Kein wahrnehmbarer Geruch bei der Verarbeitung

(2): Geruchsentwicklung bei der Extrusion; Polymer schäumt leicht bei der MVI-Messung

(3): Sehr intensiver Geruch bei der Verarbeitung

## Patentansprüche

1. Stabilisierte Polyaryletherketon-Formmasse, enthaltend als wesentliche Bestandteile, bezogen auf das Gesamtgewicht der Formmassen

A: 50 bis 99,99 Gew.-% eines durch elektrophile Polykondensation hergestellten Polyaryletherketons A, das zu mindestens 50 mol-% aus Einheiten der allgemeinen Formel I

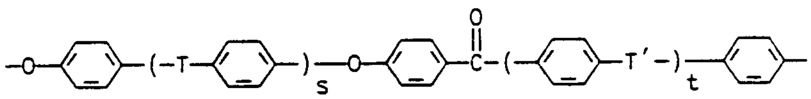 I

oder deren kernsubstituierten $C_1$- bis $C_8$-Alkyl-, $C_6$- bis $C_{20}$-Aryl- oder Halogenderivaten besteht, wobei s, t jeweils den Wert 0, 1, 2 oder 3 annehmen können und T, T' -O- oder -CO- bedeuten,

B: 0,01 bis 4 Gew.-% einer polymeren Phosphorverbindung B, enthaltend Einheiten der allgemeinen Formel IIa

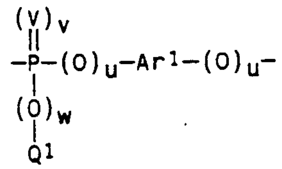 (IIä),

oder der allgemeinen Formel IIb

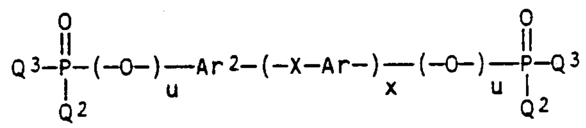 (IIb),

in denen die Substituenten und Indices folgende Bedeutungen haben:

V — Sauerstoff oder Schwefel

$Q^1$ — $C_1$- bis $C_{25}$-Alkylgruppen oder Arylgruppen mit 6 bis 25 C-Atomen, wobei die aromatischen Ringe durch Alkylgruppen mit 1 bis 4 C-Atomen ein- bis dreifach substituiert sein können

$Q^2$, $Q^3$ — unabhängig voneinander $C_1$- bis $C_{20}$-Alkylgruppen, $C_1$- bis $C_{20}$-Alkoxygruppen, Aryl- oder Aryloxygruppen mit 6 bis 20 Kohlenstoffatomen, wobei die vorgenannten Kohlenwasserstoffreste durch 1 bis 3 Heteroatome wie Stickstoff, Sauerstoff oder Schwefel unterbrochen sein können

$Ar^1$ — meta-Phenylen, para-Phenylen oder 2 bis 6 aromatische Ringe, die in meta- oder para-Stellung durch eine chemische Bindung, durch Sauerstoff, Schwefel, eine (-CO-)-Gruppe, eine (-$SO_2$-)-Gruppe oder eine (-$C(CH_3)_2$-)-Gruppe miteinander verknüpft sind und wobei jeder aromatische Ring ein- bis dreifach durch Alkylgruppen mit 1 bis 4 C-Atomen substituiert sein kann

$Ar^2$ — meta- oder para-Phenylen, das ein- bis dreifach durch $C_1$-bis $C_{10}$-Alkyl-, $C_1$- bis $C_{10}$-Alkoxy, $C_6$- bis $C_{20}$-Aryl, $C_6$- bis $C_{20}$-Aryloxygruppen oder Halogenatome substituiert sein kann

X — -O-, -CO-, -S-, eine (-$SO_2$-)-Gruppe, eine (-$C(CH_3)_2$-)-Gruppe oder eine chemische Bindung

u,v,w — 0 oder 1 und

x — 0, 1 oder 2

C: bis 50 Gew.-% eines weiteren, von A) verschiedenen Thermoplasten,

D: bis 45 Gew.-% faser- oder teilchenförmige Füllstoffe oder deren Mischungen.

**2.** Formmasse nach Anspruch 1, dadurch gekennzeichnet, daß sie die Komponente B) in einer Menge von 0,1 bis 1 Gew.-% enthalten.

**3.** Formmasse nach den Ansprüchen 1 oder 2, dadurch gekennzeichnet, daß die Komponente B) eine inhärente Viskosität größer als 0,1 (gemessen an 1 g/100 ml in N-Methylpyrrolidon bei 25 °C) aufweist.

4. Formmasse nach den Ansprüchen 1 bis 3, dadurch gekennzeichnet, daß als Komponente A) ein Polyaryletherketon der Einheit Ie

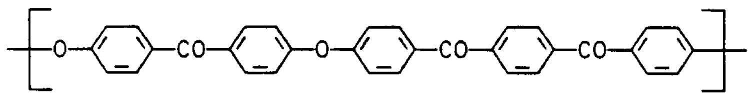
Ie

eingesetzt wird.

5. Verwendung einer Formmasse gemäß den Ansprüchen 1 bis 4 zur Herstellung von Fasern, Folien und Formkörpern.

6. Fasern, Folien und Formkörper, erhältlich aus den stabilisierten Polyaryletherketon-Formmassen gemäß einem der Ansprüche 1 bis 4 als wesentlichen Komponenten.

## Claims

1. A stabilized polyaryl ether ketone molding composition containing as essential substituents, based on the total weight of the molding composition

A: from 50 to 99.99 % by weight of a polyaryl ether ketone A prepared by electrophilic polycondensation which is constituted to at least 50 mol % by units of the general formula I

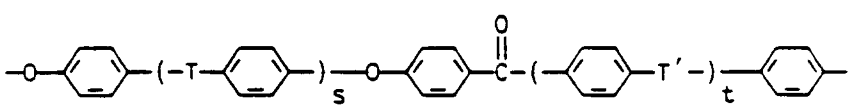
I

where s and t are each 0, 1, 2 or 3 and T and T' are each -O- or -CO-, or a ring-substituted $C_1$-$C_8$-alkyl, $C_6$-$C_{20}$-aryl or halogen derivative thereof,

B: from 0.01 to 4 % by weight of a polymeric phosphorus compound B containing units of the general formula IIa

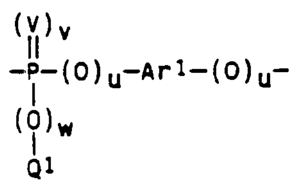
(IIa),

or of the general formula IIb

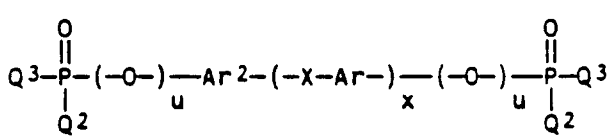
(IIb),

in which the substituents and indices have the following meanings:

V is oxygen or sulfur,

$Q^1$ is $C_1$-$C_{25}$-alkyl or aryl of from 6 to 25 carbon atoms in which the aromatic rings can be monosubstituted, disubstituted or trisubstituted by alkyl of from 1 to 4 carbon atoms,

$Q^2$ and $Q^3$ are each independently of the other $C_1$-$C_{20}$-alkyl, $C_1$-$C_{20}$-alkoxy or aryl or aryloxy of from 6 to 20 carbon atoms, it being possible for the aforementioned hydrocarbon radicals to be interrupted by from 1 to 3 heteroatoms such as nitrogen, oxygen or sulfur,

$Ar^1$ is meta-phenylene, para-phenylene or from 2 to 6 aromatic rings which are linked

together meta or para via a chemical bond or via oxygen, sulfur, a -CO- group, an $-SO_2-$ group or a $-C(CH_3)_2-$ group, it being possible for each aromatic ring to be monosubstituted, disubstituted or trisubstituted by alkyl of from 1 to 4 carbon atoms,

$Ar^2$ is meta- or para-phenylene which may be monosubstituted, disubstituted or trisubstituted by $C_1$-$C_{10}$-alkyl, $C_1$-$C_{10}$-alkoxy, $C_6$-$C_{20}$-aryl, $C_6$-$C_{20}$-aryloxy or halogen,

X is -O-, -CO-, -S-, an $-SO_2-$ group, a $-C(CH_3)_2-$ group or a chemical bond,

u,v and w are each 0 or 1, and

x is 0, 1 or 2,

C: up to 50 % by weight of a further thermoplastic which differs from A),

D: up to 45 % by weight of fibrous or particulate fillers or mixtures thereof.

**2.** A molding composition as claimed in claim 1, containing component B) in an amount of from 0.1 to 1 % by weight.

**3.** A molding composition as claimed in claim 1 or 2, wherein component B) has an inherent viscosity greater than 0.1 (measured on 1 g/100 ml in N-methylpyrrolidone at 25 °C).

**4.** A molding composition as claimed in claim 1 or 2 or 3, wherein component A) is a polyaryl ether ketone of unit Ie

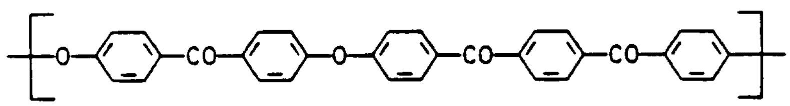 Ie

**5.** The use of a molding composition as claimed in claim 1 or 2 or 3 or 4 for producing fibers, films and moldings.

**6.** A fiber, film or molding obtainable from the stabilized polyaryl ether ketone molding composition as claimed in claim 1 or 2 or 3 or 4 as essential component.

**Revendications**

**1.** Masses à mouler de polyaryléthercétone stabilisées, contenant comme composants essentiels, par rapport au poids total de la masse à mouler,

A: 50 à 99,99% en poids d'une polyaryléthercétone A qui a été préparée par polycondensation électrophile et qui se compose, pour 50% en moles au moins, de motifs de formule générale I

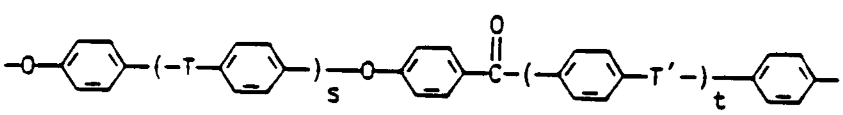 I

ou de dérivés de ceux-ci substitués sur les noyaux par des restes alkyle en $C_1$-$C_8$, aryle en $C_6$-$C_{20}$ ou des atomes d'halogène, s et t pouvant prendre chacun la valeur 0, 1, 2 ou 3 et T, T' représentant -O- ou -CO-,

B: 0,01 à 4% en poids d'un composé polymère du phosphore B, contenant des motifs de formule générale IIa

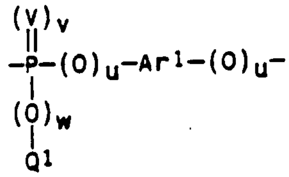

(IIa),

ou de formule générale IIb

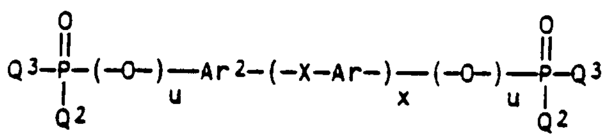

(IIb),

dans lesquelles les substituants et les indices ont les significations suivantes:

- V atome d'oxygène ou de soufre,
- $Q^1$ groupements alkyle en $C_1$-$C_{25}$ ou groupements aryle à 6-25 atomes de carbone, les noyaux aromatiques pouvant être substitués une à trois fois par des groupements alkyle à 1-4 atomes de carbone
- $Q^2$, $Q^3$ indépendamment l'un de l'autre, groupements alkyle en $C_1$-$C_{20}$, groupements alcoxy en $C_1$-$C_{20}$, groupements aryle ou aryloxy à 6-20 atomes de carbone, les restes hydrocarbonés susmentionnés pouvant être interrompus par 1 à 3 hétéroatomes tels que des atomes d'azote, d'oxygène ou de soufre,
- $Ar^1$ reste métaphénylène, paraphénylène ou 2 à 6 noyaux aromatiques qui sont reliés entre eux, en position méta ou para, par une liaison chimique, par un atome d'oxygène, de soufre, par un groupement (-CO-), un groupement ($-SO_2-$) ou un groupement ($-C(CH_3)_2-$), chaque noyau aromatique pouvant être substitué une à trois fois par des groupements alkyle à 1-4 atomes de carbone,
- $Ar^2$ reste méta- ou paraphénylène qui peut être substitué une à trois fois par des groupements alkyle en $C_1$-$C_{10}$, alcoxy en $C_1$-$C_{10}$, aryle en $C_6$-$C_{20}$, aryloxy en $C_6$-$C_{20}$ ou par des atomes d'halogène,
- X -O-, -CO-, -S-, groupement ($-SO_2-$), groupement ($-C(CH_3)_2-$) ou liaison chimique,
- u,v,w 0 ou 1 et
- x 0, 1 ou 2,
- C: jusqu'à 50% en poids d'un autre thermoplastique différent de A),
- D: jusqu'à 45% en poids de charges fibreuses ou particulaires ou de mélanges de celles-ci.

2. Masses à mouler selon la revendication 1, caractérisées en ce qu'elles contiennent le composant B) dans une proportion de 0,1 à 1% en poids.

3. Masses à mouler selon la revendication 1 ou 2, caractérisées en ce que le composant B) présente une viscosité inhérente supérieure à 0,1 (mesurée sur 1 g/100 ml dans de la N-méthylpyrrolidone à 25 °C).

4. Masses à mouler selon l'une quelconque des revendications 1 à 3, caractérisée en ce qu'il est utilisé, comme composant A), une polyaryléthercétone se composant du motif Ie

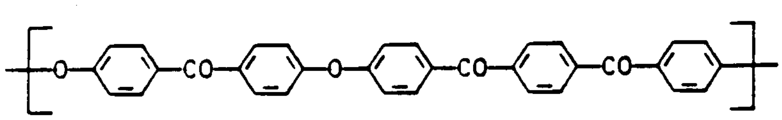

Ie

**5.** Utilisation d'une masse à mouler selon l'une quelconque des revendications 1 à 4 pour la fabrication de fibres, de feuilles et de corps moulés.

**6.** Fibres, feuilles et corps moulés, obtenus à partir des masses à mouler de polyaryléthercétone stabilisées selon l'une quelconque des revendications 1 à 4 en tant que composants essentiels.